# EUROPÄISCHE PATENTSCHRIFT

(11) **EP 1 136 670 B1**
(45) Veröffentlichungstag und Bekanntmachung des Hinweises auf die Patenterteilung: **09.03.2005**
(21) Anmeldenummer: 01106234.6
(22) Anmeldetag: 14.03.2001
(51) Int. Cl.: F01N 11/00, B01D 53/94, F02D 41/14

(54) **Vorrichtung und Verfahren zur Funktionsüberwachung eines 3-Wege-Katalysators im Abgaskanal einer Verbrennungskraftmaschine**
Monitoring device and method of a 3-way catalyst in the exhaust pipe of an internal combustion engine
Dispositif et procédé de surveillance d'un catalyseur à trois voies dans le pot d'échappement d'un moteur à combustion interne

(30) Priorität: 22.03.2000 DE 10014239
(43) Veröffentlichungstag der Anmeldung: 26.09.2001
(73) Patentinhaber: Volkswagen Aktiengesellschaft, 38436 Wolfsburg (DE)
(72) Erfinder: Hahn, Hermann, 38165 Lehre (DE); Gömer, Steffen, 38154 Königslutter (DE); Daetz, Michael, 38473 Tiddische (DE)
(74) Vertreter: Pohlmann, Bernd Michael

(56) Entgegenhaltungen:
- EP-A- 0 814 249
- EP-A- 1 099 844
- DE-A- 19 819 461
- DE-C- 19 852 244

## Beschreibung

Die Erfindung betrifft eine Vorrichtung und ein Verfahren zur Funktionsüberwachung eines 3-Wege-Katalysators im Abgaskanal einer Verbrennungskraftmaschine mit den in den unabhängigen Ansprüchen genannten Merkmalen.

Während eines Verbrennungsvorgangs eines Luft-Kraftstoff-Gemisches in der Verbrennungskraftmaschine entstehen in unterschiedlichen Anteilen Schadstoffkomponenten, wie Kohlenmonoxid CO, unvollständig verbrannte Kohlenwasserstoffe HC oder Stickoxide NOₓ. Um die Emissionen derartiger Schadstoffe möglichst gering zu halten, ist es unter anderem bekannt, im Abgaskanal der Verbrennungskraftmaschine sogenannte 3-Wege-Katalysatoren anzuordnen. Der 3-Wege-Katalysator unterstützt einerseits eine Oxidation der Reduktionsmittel CO und HC mit Sauerstoff und andererseits eine Reduktion von NOₓ mit den Reduktionsmitteln CO und HC. In einem stöchiometrischen Betriebspunkt (λ = 1) sind die Schadstoffmassenströme der einzelnen Schadstoffkomponenten derart aufeinander abgestimmt, dass eine besonders hohe Konvertierungsrate und damit eine geringe Gesamtemission gewährleistet ist.

Die abgasrelevanten Eigenschaften des Katalysators können sich im Laufe eines Fahrzeuglebens verändern. So sinkt mit zunehmender Betriebsdauer in Folge chemischer, mechanischer oder thermischer Belastung die Konvertierungsrate des Katalysators. Es besteht daher die Notwendigkeit einer Funktionsüberwachung des Katalysators, um gegebenenfalls Gegenmaßnahmen zu ergreifen.

Zur Einstellung beziehungsweise Aufrechterhaltung eines stöchiometrischen Betriebs der Verbrennungskraftmaschine ist es ferner bekannt, mit geeigneten Stellmitteln eine Zusammensetzung des Luft-Kraftstoff-Gemisches zu beeinflussen. Als Stellmittel kommen beispielsweise in Frage eine Drosselklappe, ein Kraftstoffeinspritzsystem oder eine Abgasrückführeinrichtung. Die jeweils den Stellmitteln vorgegebenen Stellgrößen werden bei herkömmlichen Verfahren anhand eines Signals einer im Abgaskanal angeordneten Lambdasonde bestimmt. Die zumeist motornah angeordnete Lambdasonde liefert ein Signal für einen Sauerstoffpartialdruck im Abgas. Ein Gemischzustand der Verbrennungskraftmaschine wird dann so geregelt, dass möglichst genau ein Sauerstoffpartialdruck vorliegt, an dem aus Erfahrungswerten auf eine weitestgehend stöchiometrische Zusammensetzung geschlossen wird.

Übliche Katalysatoren besitzen eine Sauerstoffspeicherfähigkeit, das heißt, wenn das Abgas lokal mager wird, kann in begrenztem Umfang der überschüssige Sauerstoff im Katalysator gebunden werden. Diese Eigenschaft führt dazu, dass auch geringe Schwankungen der Abgaszusammensetzung vom Katalysator toleriert werden können, ohne dass es zu einem Austritt von Schadstoffen kommt. Eine Folge hiervon ist, dass als Regelpunkt für die Verbrennungskraftmaschine in der Regel nicht der exakte (λ=1)-Punkt verwendet wird, sondern eine leicht fette, zum Beispiel 1 bis 2 Promille darunter liegende Einstellung gefahren wird. Ferner kann es sinnvoll sein, den Regelpunkt vom Betriebspunkt der Verbrennungskraftmaschine abhängig zu machen.

Zur Korrektur der Genauigkeit dieser Lambdaregelung wird oftmals auf eine zusätzliche, hinter dem Katalysator angeordnete Lambdasonde zurückgegriffen. In der Regel handelt es sich hierbei um eine Sprungsonde, die im Bereich um λ = 1 sehr exakt mit hoher Auflösung den Sauerstoffpartialdruck messen kann. Das Signal dieser Sonde wird genutzt, um einen Sollregelwert der vorderen Sonde zu überprüfen und gegebenenfalls zu korrigieren. Dies bezeichnet man als Führungsregelung. Trotzdem ist die Genauigkeit der Lambdaregelung insbesondere mit gealtertem Katalysator und/oder Sonden unbefriedigend, da es immer wieder zu teils erheblichen Abweichungen vom tatsächlichen stöchiometrischen Betriebspunkt kommt. Infolgedessen kann auch eine Funktionsüberwachung des Katalysators beeinträchtigt werden, die auf einer exakten Einstellung beziehungsweise Aufrechterhaltung eines Lambdawertes beruht.

Aus der EP 0 814 249 A2 ist ein Verfahren zur Funktionsüberwachung eines 3-Wege-Katalysators im Abgaskanal einer Verbrennungskraftmaschine bekannt, wobei im Abgaskanal zumindest eine Lambdasonde und eine NOx-sensitive Messeinrichtung stromab des 3-Wege-Katalysators angeordnet sind und bei dem ein Lambdabereich vorgegeben wird. Beim Vorliegen eines Lambdawertes innerhalb eines Lambdabereichs wird eine Grösse des NOx-Signals in einem vorgegebenen Messintervall erfasst und diese Grösse mit Schwellenwerten verglichen. Beim Überschreiten der Schwellenwerte wird eine Schädigung des 3-Wege-Katalysators angezeigt.

Ferner ist aus der DE 198 52 244 C1 ein Verfahren zur Abgasreinigung bekannt, welches zur Trimmregelung bei einer Brennkraftmaschine statt einer stromab des 3-Wege-Katalysators angeordneten Lambdasonde einen NOx-empfindlichen Messaufnehmer verwendet und den Zusammenhang zwischen NOx-Konzentration im Abgas und Lambda-Wert ausnutzt, um ein internes, einen Vorzeichenwechsel bei Lambda = 1 aufweisendes Signal des Messaufnehmers zu verwenden, da das Signal des Messaufnehmers aufgrund einer NH₃-Querempfindlichkeit bei Lambda = 1 ein lokales Minimum hat.

Aufgabe der vorliegenden Erfindung ist es, eine Vorrichtung und ein Verfahren zur Verfügung zu stellen, mit denen die Funktionsüberwachung des Katalysators verbessert werden kann.

Erfindungsgemäß wird diese Aufgabe durch die Vorrichtung und das Verfahren zur Funktionsüberwachung eines 3-Wege-Katalysators mit den in den unabhängigen Ansprüchen genannten Merkmalen gelöst.

Im Abgaskanal der Verbrennungskraftmaschine sind zumindest eine Lambdasonde und stromab des 3-Wege-Katalysators eine NOₓ-sensitive Messeinrichtung angeordnet. Nach dem Verfahren werden
(a) ein Lambdabereich vorgegeben,
(b) beim Vorliegen eines Lambdawertes innerhalb des Lambdabereiches eine Größe des NOₓ-Signals und/oder Wert eines Gradienten des NOₓ-Signals in einem vorgegebenen Messintervall erfasst, die als Bezugswerte bezeichnet werden und
(c) die Bezugswerte mit vorgegebenen Schwellenwerten verglichen und beim Überschreiten der Schwellenwerte eine Schädigung des 3-Wege-Katalysators angezeigt.

Während der Funktionsüberwachung durch das Steuergerät das NOₓ-Signal der NOₓ-sensitiven Messeinrichtung und der Lambdawert an der zumindest einen Lambdasonde erfasst werden und in Abhängigkeit von den Gradienten des Lambdawertes und des NOₓ-Signals eine zu verbrennende Gemischzusammensetzung in Richtung eines tatsächlich eingeforderten Betriebspunktes korrigierend beeinflusst wird. Dieser Eingriff erfolgt solange, bis der vorgegebene Schwellenwert für den Gradienten des NOₓ-Signals erreicht wird (NOₓ-Führungsregelung).

Mit steigendem Lambdawert und NOₓ-Signal wird der Gradient positiv. In bevorzugter Weise erfolgt eine Änderung der Gemischzusammensetzung während der NOₓ-Führungsregelung in Richtung einer fetteren Atmosphäre, wenn
- die Gradienten für das NOₓ-Signal und den Lambdawert positiv sind oder
- die Gradienten für das NOₓ-Signal und den Lambdawert negativ sind.

Dagegen erfolgt eine Änderung in Richtung einer magereren Atmosphäre, wenn
- der Gradient für das NOₓ-Signal negativ und der Gradient für den Lambdawert positiv sind oder
- der Gradient für das NOₓ-Signal positiv und der Gradient für den Lambdawert negativ sind.

Die Vorrichtung umfasst dabei Mittel, mit denen die vorgenannten Verfahrensschritte durchgeführt werden können. Diese Mittel umfassen insbesondere das Steuergerät, in dem eine Prozedur in digitalisierter Form hinterlegt ist, deren Ausführung die vorgenannte Führungsüberwachung ermöglicht. Das Steuergerät kann Teil eines zumeist bereits vorhandenen Motorsteuergerätes sein, ist aber auch als selbstständige Einheit realisierbar.

Die Mittel umfassen in bevorzugter Ausführung femer eine Lambdasonde stromauf des Katalysators (vordere Lambdasonde) und/oder eine Lambdasonde stromab desselben (hintere Lambdasonde). Weiterhin können die hintere Lambdasonde und die NOₓsensitive Messeinrichtung in ihrer Funktion - nämlich der Erfassung eines Sauerstoffpartialdruckes beziehungsweise einer NOₓ-Konzentration - in einem entsprechend modifizierten, modernen NOₓ-Sensor zusammengefasst werden.

In einer bevorzugten Ausgestaltung des Verfahrens wird der Lambdabereich so gewählt, dass er den stöchiometrischen Betriebspunkt der Verbrennungskraftmaschine beinhaltet. Der Lambdabereich liegt dabei bevorzugt in einem Bereich von λ = 0,9 bis 1,1, insbesondere λ = 0,98 bis 1,02.

Ferner ist es bevorzugt, die Funktionsüberwachung abzubrechen, wenn der Lambdawert den Lambdabereich im Messintervall verlässt. Darüber hinaus kann das NOₓ-Signal vor der Führungsregelung gefiltert und/oder über einen vorgegebenen Zeitraum gemittelt werden, so dass Schwankungen, insbesondere bei gealterten NOₓ-Messeinrichtungen, kompensiert werden können.

Weitere bevorzugte Ausgestaltungen der Erfindung ergeben sich aus den übrigen, in den Unteransprüchen genannten Merkmalen.

Die Erfindung wird nachfolgend in einem Ausführungsbeispiel anhand der zugehörigen Zeichnungen näher erläutert. Es zeigen:
- Figur 1: eine Prinzipdarstellung einer Verbrennungskraftmaschine mit einer Abgasreinigungsanlage und
- Figur 2: einen hypothetischen Verlauf eines NOₓ-Signals stromab eines 3-Wege-Katalysators im Bereich eines stöchiometrischen Betriebspunktes der Verbrennungskraftmaschine.

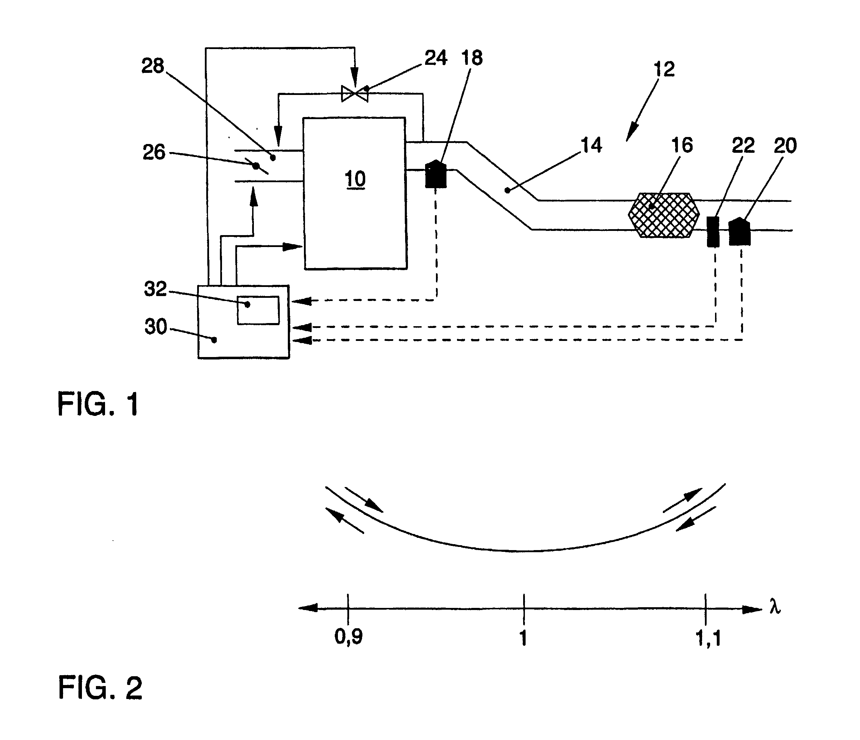

Die Figur 1 zeigt in einer schematischen Skizze eine Verbrennungskraftmaschine 10 mit einer nachgeordneten Abgasreinigungsanlage 12. Die Abgasreinigungsanlage 12 umfasst unter anderem einen im Abgaskanal 14 angeordneten 3-Wege-Katalysator 16. Mit Hilfe des Katalysators 16 können die während eines Verbrennungsvorgangs eines Luft-Kraftstoff-Gemisches in der Verbrennungskraftmaschine 10 entstehenden Schadstoffe in weniger umweltrelevante Produkte konvertiert werden. Dabei unterstützt der Katalysator 16 einerseits eine Oxidation von Reduktionsmitteln, wie Kohlenmonoxid CO und unvollständig verbrannte Kohlenwasserstoffe HC, und andererseits eine Reduktion von Stickoxiden NOₓ durch die Reduktionsmittel CO und HC. In einem stöchiometrischen Betriebspunkt der Verbrennungskraftmaschine 10 sind die resultierenden Schadstoffmassenströme und Sauerstoffanteile am Abgas besonders günstig, um eine sehr hohe Konvertierungsrate zu gewähren. Eine hohe Konvertierungsrate kann aber nur bei einem funktionstüchtigen Katalysator 16 sichergestellt werden, so dass eine Funktionsüberwachung erforderlich ist.

Der Abgasreinigungsanlage 12 ist ferner eine Sensorik zugeordnet, die es ermöglicht, eine Zusammensetzung des Abgases in ausgewählten Bereichen des Abgaskanals 14 zu erfassen. Die Sensorik umfasst in diesem Falle eine vordere Lambdasonde 18 sowie stromab des Katalysators 16 eine weitere, hintere Lambdasonde 20 und eine NOₓsensitive Messeinrichtung 22. Die Lambdasonde 18 kann eine Sprung- oder Breitbandsonde sein, während für das nachfolgend noch näher geschilderte NOₓ-Führungsregelungsverfahren stromab des Katalysators 16 lediglich eine Sprungsonde notwendig ist. Als NOₓ-sensitive Messeinrichtung 22 kann ein NOₓ-Sensor vorgesehen sein. Gegebenenfalls ist es möglich, die Komponenten 20, 22 zusammen zu fassen, da moderne NOₓ-Sensoren sowohl eine Erfassung eines Sauerstoffpartialdruckes als auch einer NOₓ-Konzentration im Abgas ermöglichen.

Des weiteren sind der Verbrennungskraftmaschine 10 Stellmittel zugeordnet, mit denen eine Zusammensetzung des zu verbrennenden Luft-Kraftstoff-Gemisches beeinflussbar ist. Diese Stellmittel umfassen insbesondere eine Abgasrückführeinrichtung 24, ein hier nicht dargestelltes Einspritzsystem und eine Drosselklappe 26 in einem Ansaugrohr 28 der Verbrennungskraftmaschine 10. Über ein Motorsteuergerät 30 kann mit Hilfe der genannten Stellmittel eine Lambdaregelung durch Vorgabe von Sollregelwerten erfolgen. Derartige Verfahren sind bekannt und sollen daher an dieser Stelle nicht näher erläutert werden.

In das Motorsteuergerät 30 integriert ist ein weiteres Steuergerät 32. Das Steuergerät 32 kann aber auch als selbstständige Einheit realisiert werden. In dem Steuergerät 32 ist eine Prozedur in digitalisierter Form hinterlegt, deren Ausführung die nachfolgend beschriebene Funktionsüberwachung im stöchiometrischen Betrieb der Verbrennungskraftmaschine 10 ermöglicht.

Soll die Verbrennungskraftmaschine 10 unter stöchiometrischen Bedingungen betrieben werden, so wird durch das Steuergerät 32 zunächst ein Lambdawert an der vorderen Sonde 18 erfasst und anhand dieses Wertes ein Sollregelwert durch die Stellmittel vorgegeben (Lambdaregelung). Im Weiteren werden die Sollregelwerte in Abhängigkeit vom Lambdawert an der hinteren Lambdasonde 20 und dem NOₓ-Signal der NOₓ-Messeinrichtung 22 überprüft und gegebenenfalls korrigiert (NOₓ-Führungsregelung).

Die Figur 2 zeigt einen hypothetischen Verlauf eines NOₓ-Signals, wie er von der NOₓ-Messeinrichtung 22 im Bereich eines stöchiometrischen Betriebspunktes (λ = 1) der Verbrennungskraftmaschine 10 erfasst werden kann. Marktübliche NOₓ-Messeinrichtungen 22 besitzen prinzipbedingt eine Querempfindlichkeit zu Ammoniak NH₃. NH₃ entsteht nicht bei der Verbrennung des Luft-Kraftstoff-Gemisches, sondern wird im Katalysator 16 erzeugt, wenn dort unterstöchiometrisches Abgas vorliegt (λ < 1). Dies bedeutet für den Bereich um λ= 1, dass hinter einem funktionierenden 3-Wege-Katalysator 16 bei exakt λ = 1 weder NOₓ noch NH₃ im Abgas vorliegen. Das NOₓ-Signal der NOₓ-Messeinrichtung 22 ist daher nahe dem Nullpunkt. Wird das Abgas mager, so überwiegen im Katalysator 16 die lokal mageren Zonen, in denen nur wenig NOₓ konvertiert werden kann. Der Gehalt an NOₓ im Abgas steigt und ebenso als Reaktion darauf das NOₓ-Signal der NOₓ-Messeinrichtung 22. Wird das Abgas fett, so entsteht NH₃ im Katalysator 16. Das austretende NH₃ wird von der NOₓ-Messeinrichtung 22 ebenfalls gemessen und das NOₓ-Signal steigt. Daher ist sowohl das NOₓ-Signal als auch der Lambdawert an der Sonde 20 zur Überprüfung des Sollregelwertes und gegebenenfalls zur Korrektur desselben und damit zur NOₓ-Führungsregelung geeignet.

Wird beispielsweise ein in Abhängigkeit von der Sonde 18 ermittelter Sollregelwert vorgegeben - dessen Realisierung allerdings nur zu einem Betriebszustand führt, der leicht unterstöchiometrisch ist - so kann eine Einstellung des tatsächlichen, stöchiometrischen Betriebspunktes anhand der Gradienten der Sensoren 20, 22 erfolgen. Der Gradient des NOₓ-Signals in einem vorgegebenen Messzeitraum kann dabei entweder negativ oder positiv sein. Ein positiver Gradient liegt vor, wenn das Signal ansteigt. In eben gleicher Weise kann der Lambdawert an der hinteren Sonde 20 bewertet werden. Hier ist der Gradient positiv, wenn der Lambdawert steigt. Die Lambdaregelung wird nun derart durchgeführt, dass das Luft-Kraftstoff-Gemisch in Richtung einer fetteren Atmosphäre verstellt wird, wenn
- die Gradienten für das NOₓ-Signal und den Lambdawert negativ sind oder
- die Gradienten für das NOₓ-Signal und den Lambdawert positiv sind.

In den beiden verbleibenden Kombinationsmöglichkeiten erfolgt die Lambdaregelung des Luft-Kraftstoff-Gemisches in Richtung einer magereren Atmosphäre.

Ein Umfang eines Regelungseingriffes während der Lambdaregelung kann entweder in Abhängigkeit von einer Größe des Gradienten des NOₓ-Signals oder durch Vorgabe eines festen Regelwertes bestimmt werden. Die Lambdaregelung wird so lange aufrecht erhalten, bis der Gradient des NOₓ-Signals kleiner als ein vorgegebener Schwellenwert wird. Alternativ oder in Kombination dazu wird mit Erreichen eines Sollwertes davon ausgegangen, dass der stöchiometrische Betriebspunkt erreicht ist (Endsignale).

Zur Funktionsüberwachung des Katalysators 16 wird nun ein Lambdabereich vorgegeben, der um den stöchiometrischen Betriebspunkt präzidiert, also möglichst durch den Bereich, in dem die NOₓ-Führungsregelung aufrecht erhalten wird, abgedeckt wird. Dieser Lambdabereich kann in den Grenzen von λ = 0,9 bis 1,1, insbesondere von λ = 0,98 bis 1,02 festgelegt werden.

Wird von außen in diesen Lambdabereich hinein geregelt - liegt also ein Lambdawert innerhalb des Lambdabereiches vor - so wird eine Größe des NOₓ-Signals und/oder Wert eines Gradienten des NOₓ-Signals in einem vorgegeben Messintervall erfasst (Bezugswerte). Die erfassten Bezugswerte werden anschließend in das Steuergerät 32 eingelesen und dort mit Schwellenwerten verglichen. Übersteigt die Größe des NOₓ-Signals einen zugeordneten ersten Schwellenwert und/oder der Wert des Gradienten einen zweiten Schwellenwert, so deutet dies auf eine Schädigung des Katalysators 16 hin. Durch die Schädigung sinkt zum Einen eine Sauerstoffspeicherfähigkeit des Katalysators 16, was ein schnelleres Übersteuern (höherer NOₓ-Gradient) bewirkt. Zum Anderen ist eine Konvertierungsrate erniedrigt mit der Folge, dass das NOₓ-Signal ansteigt.

Wenn während der Funktionsüberwachung der Lambdabereich verlassen wird, dann liegt zumeist ein betriebsbedingter motorischer Eingriff vor. Eine ausreichend genaue Funktionsüberwachung ist in einem solchen Fall nicht sichergestellt. Daher wird die Funktionsüberwachung abgebrochen. Weiterhin kann zur Vermeidung von Fehlmessungen eine Filterung oder Mittelung des NOₓ-Signals vor Verarbeitung erfolgen.

Eine Anzeige der Schädigung kann beispielsweise derart erfolgen, dass ein Fehler in einen Fehlerspeicher einer Onboard-Diagnose eingetragen wird. Gegebenenfalls kann auch eine Warnleuchte aktiviert werden, die den Fahrzeugführer auffordert, möglichst umgehend eine Wartung durchführen zu lassen.

### BEZUGSZEICHENLISTE

- 10: Verbrennungskraftmaschine
- 12: Abgasreinigungsanlage
- 14: Abgaskanal
- 16: 3-Wege-Katalysator
- 18: Lambdasonde (vordere)
- 20: Lambdasonde (hintere)
- 22: Messeinrichtung (NOₓ)
- 24: Abgasrückführeinrichtung
- 26: Drosselklappe
- 28: Ansaugrohr
- 30: Motorsteuergerät
- 32: Steuergerät
- λ: Lambdawert

## Patentansprüche

1. Verfahren zur Funktionsüberwachung eines 3-Wege-Katalysators (16) im Abgaskanal (14) einer Verbrennungskraftmaschine (10), wobei im Abgaskanal (14) zumindest eine Lambdasonde (18, 20) und eine NOₓ-sensitive Messeinrichtung (22) stromab des 3-Wege-Katalysators (16) angeordnet sind, und bei dem
(a) ein Lambdabereich vorgegeben wird,
(b) beim Vorliegen eines Lambdawertes innerhalb des Lambdabereichs eine Größe des NOₓ-Signals und/oder Wert eines Gradienten des NOₓ-Signals in einem vorgegebenen Messintervall erfasst werden, die als Bezugswerte bezeichnet werden und
(c) die Bezugswerte mit vorgegebenen Schwellenwerten verglichen und beim Überschreiten der Schwellenwerte eine Schädigung des 3-Wege-Katalysators angezeigt wird,
wobei der Lambdabereich einen stöchiometrischen Betriebspunkt der Verbrennungskraftmaschine (10) umfasst, und während der Funktionsüberwachung durch ein Steuergerät (32) ein NOₓ-Signal der NOₓ-sensitiven Messeinrichtung (22) und ein Lambdawert an der zumindest einen Lambdasonde (18, 20) erfasst werden und in Abhängigkeit von den Gradienten des Lambdawertes und des NOₓ-Signals eine zu verbrennende Gemischzusammensetzung in Richtung eines tatsächlich eingeforderten Betriebspunktes korrigierend beeinflusst wird, bis der vorgegebene Schwellenwert für den Gradienten des NOₓ-Signals erreicht wird (NOₓ-Führungsregelung), **dadurch gekennzeichnet, dass** eine Änderung der Gemischzusammensetzung in Richtung einer fetteren Atmosphäre erfolgt, wenn
- die Gradienten für das NOₓ-Signal und den Lambdawert positiv sind oder
- die Gradienten für das NOₓ-Signal und den Lambdawert negativ sind,
und eine Änderung in Richtung einer magereren Atmosphäre erfolgt, wenn
- der Gradient für das NOₓ-Signal negativ und der Gradient für den Lambdawert positiv sind oder
- der Gradient für das NOₓ-Signal positiv und der Gradient für den Lambdawert negativ sind.

2. Verfahren nach Anspruch 1, **dadurch gekennzeichnet, dass** das NOₓ-Signal vor der Führungsregelung gefiltert und/oder über einen vorgegebenen Zeitraum gemittelt wird.

3. Verfahren nach einem der vorhergehenden Ansprüche, **dadurch gekennzeichnet, dass** die Funktionsüberwachung abgebrochen wird, wenn der Lambdawert den Lambdabereich im Messintervall vertässt.

4. Verfahren nach einem der vorhergehenden Ansprüche, **dadurch gekennzeichnet, dass** der Lambdabereich innerhalb eines Bereich von λ = 0,9 bis 1,1, insbesondere λ = 0,98 bis 1,02 liegt.

5. Vorrichtung zur Funktionsüberwachung . eines 3-Wege-Katalysators (16) im Abgaskanal (14) einer Verbrennungskraftmaschine (10), wobei im Abgaskanal (14) zumindest eine Lambdasonde (18, 20) und eine NOₓ-sensitive Messeinrichtung (22) stromab des 3-Wege-Katalysators (16) angeordnet sind, und bei dem
(a) ein Lambdabereich vorgegeben wird,
(b) beim Vorliegen eines Lambdawertes innerhalb des Lambdabereichs eine Größe des NOₓ-Signals und/oder Wert eines Gradienten des NOₓ-Signals in einem vorgegebenen Messintervall erfasst werden, die als Bezugswerte bezeichnet werden und
(c) die Bezugswerte mit Schwellenwerten verglichen und beim Überschreiten der Schwellenwerte eine Schädigung des 3-Wege-Katalysators angezeigt wird,
wobei der Lambdabereich einen stöchiometrischen Betriebspunkt der Verbrennungskraftmaschine (10) umfasst, und während der Funktionsüberwachung durch ein Steuergerät (32) ein NOₓ-Signal der NOₓ-sensitiven Messeinrichtung (22) und ein Lambdawert an der zumindest einen Lambdasonde (18, 20) erfasst werden und in Abhängigkeit von den Gradienten des Lambdawertes und des NOₓ-Signals eine zu verbrennende Gemischzusammensetzung in Richtung eines tatsächlich eingeforderten Betriebspunktes korrigierend beeinflusst wird, bis der vorgegebene Schwellenwert für den Gradienten des NOₓ-Signals erreicht wird (NOₓ-Führungsregelung), **dadurch gekennzeichnet, dass** eine Änderung der Gemischzusammensetzung in Richtung einer fetteren Atmosphäre erfolgt, wenn
- die Gradienten für das NOₓ-Signal und den Lambdawert positiv sind oder
- die Gradienten für das NOₓ-Signal und den Lambdawert negativ sind,
und eine Änderung in Richtung einer magereren Atmosphäre erfolgt, wenn
- der Gradient für das NOₓ-Signal negativ und der Gradient für den Lambdawert positiv sind oder
- der Gradient für das NOₓ-Signal positiv und der Gradient für den Lambdawert negativ sind.

6. Vorrichtung nach Anspruch 5, **dadurch gekennzeichnet, dass** ein das NOₓ-Signal und die Lambdawerte erfassendes Steuergerät (32) vorgesehen ist, in dem eine Prozedur zur Funktionsüberwachung in digitalisierter Form hinterlegt ist.

7. Vorrichtung nach Anspruch 6, **dadurch gekennzeichnet, dass** das Steuergerät (32) Teil eines Motorsteuergerätes (30) ist.

8. Vorrichtung nach einem der Ansprüche 5 bis 7, **dadurch gekennzeichnet, dass** eine Lambdasonde stromauf des Katalysators (16) (vordere Lambdasonde (18)) und/oder eine Lambdasonde stromab des Katalysators (hintere Lambdasonde (20)) angeordnet sind.

9. Vorrichtung nach Anspruch 8, **dadurch gekennzeichnet, dass** die hintere Lambdasonde (20) und die NOₓ-sensitive Messeinrichtung (22) zu einem NOₓ-Sensor zusammengefasst sind.

## Claims

1. Method for monitoring the functioning of a 3-way catalytic converter (16) in the exhaust pipe (14) of an internal combustion engine (10), at least one lambda sensor (18, 20) and an NOₓ-sensitive measuring device (22) being arranged in the exhaust pipe (14) downstream of the 3-way catalytic converter (16), and in which
(a) a lambda range is predetermined,
(b) if there is a lambda value within the lambda range, a level of the NOₓ signal and/or value for a gradient of the NOₓ signal within a predetermined measurement interval, called reference values, are recorded, and
(c) the reference values are compared with predetermined threshold values, and if the threshold values are exceeded it is indicated that the 3-way catalytic converter is damaged,
the lambda range including a stoichiometric operating point of the internal combustion engine (10), and during function monitoring a control unit (32) recording an NOₓ signal from the NOₓ-sensitive measuring device (22) and a lambda value at the at least one lambda sensor (18, 20), and a mixed composition which is to be burnt being corrected towards an operating point which is actually required as a function of the gradients of the lambda value and of the NOₓ signal, until the predetermined threshold value for the gradient of the NOₓ signal is reached (NOₓ guide control), **characterized in that** the mix composition is changed towards a richer atmosphere if
- the gradients for the NOₓ signal and the lambda value are positive, or
- the gradients for the NOₓ signal and the lambda value are negative,
and the mixed composition is changed towards a leaner atmosphere if
- the gradient for the NOₓ signal is negative and the gradient for the lambda value is positive, or
- the gradient for the NOₓ signal is positive and the gradient for the lambda value is negative.

2. Method according to Claim 1, **characterized in that** the NOₓ signal is filtered before the guide control and/or is taken as a mean value over a predetermined period of time.

3. Method according to one of the preceding claims, **characterized in that** the function monitoring is interrupted if the lambda value departs from the lambda range within the measurement interval.

4. Method according to one of the preceding claims, **characterized in that** the lambda range is within a range of λ = 0.9 to 1.1, in particular λ = 0.98 to 1.02.

5. Device for monitoring the functioning of a three-way catalytic converter (16) in the exhaust pipe (14) of an internal combustion engine (10), in which at least one lambda sensor (18, 20) and an NOₓ-sensitive measuring device (22) are arranged downstream of the three-way catalytic converter (16) in the exhaust pipe (14), and in which
(a) a lambda range is predetermined,
(b) if there is a lambda value within the lambda range, a level of the NOₓ signal and/or value for a gradient of the NOₓ signal within a predetermined measurement interval, called reference values, are recorded, and
(c) the reference values are compared with predetermined threshold values, and if the threshold values are exceeded it is indicated that the 3-way catalytic converter is damaged,
the lambda range including a stoichiometric operating point of the internal combustion engine (10), and during function monitoring a control unit (32) recording an NOₓ signal from the NOₓ-sensitive measuring device (22) and a lambda value at the at least one lambda sensor (18, 20), and a mixed composition which is to be burnt being corrected towards an operating point which is actually required as a function of the gradients of the lambda value and of the NOₓ signal, until the predetermined threshold value for the gradient of the NOₓ signal is reached (NOₓ guide control), **characterized in that** the mix composition is changed towards a richer atmosphere if
- the gradients for the NOₓ signal and the lambda value are positive, or
- the gradients for the NOₓ signal and the lambda value are negative,
and the mixed composition is changed towards a leaner atmosphere if
- the gradient for the NOₓ signal is negative and the gradient for the lambda value is positive, or
- the gradient for the NOₓ signal is positive and the gradient for the lambda value is negative.

6. Device according to Claim 5, **characterized in that** a control unit (32) is provided which records the NOₓ signal and the lambda values and in which a procedure for function monitoring is stored in digitized form.

7. Device according to Claim 6, **characterized in that** the control unit (32) is part of an engine control unit (30).

8. Device according to one of Claims 5 to 7, **characterized in that** a lambda sensor is arranged upstream of the catalytic converter (16) (front lambda sensor (18)) and/or a lambda sensor is arranged downstream of the catalytic converter (rear lambda sensor (20)).

9. Device according to Claim 8, **characterized in that** the rear lambda sensor (20) and the NOₓ-sensitive measuring device (22) are combined to form an NOₓ sensor.

## Revendications

1. Procédé de surveillance de la fonction d'un catalyseur à 3 voies (16) dans le pot d'échappement (14) d'un moteur à combustion interne (10), au moins une sonde lambda (18, 20) et un dispositif de mesure sensitif de NOₓ (22) étant disposés dans le pot d'échappement (14), en aval du catalyseur à 3 voies (16) et dans lequel
(a) une plage lambda est prédéfinie
(b) si une valeur lambda dans la plage lambda existe, une dimension du signal NOₓ et/ou une valeur d'un gradient du signal NOₓ qui sont désignées en tant que valeurs de référence sont détectées dans un intervalle de mesure prédéfini et
(c) les valeurs de référence sont comparées à des valeurs seuils prédéfinies et en cas de dépassement des valeurs seuils, une détérioration du catalyseur à 3 voies est affichée,
la plage lambda comprenant un point stoechiométrique de régime du moteur à combustion interne (10) et pendant la surveillance de la fonction par un instrument de commande (32), un signal NOₓ du dispositif de mesure sensitif de NOₓ (22) et une valeur lambda étant détectés à l'au moins une sonde lambda (18, 20) et en fonction du gradient de la valeur lambda et du signal NOₓ, une composition de mélange à brûler étant influencée dans le sens d'un point de régime effectivement requis corrigeant, jusqu'à ce que la valeur seuil prédéfinie pour le gradient du signal NOₓ soit atteinte (régulation de la gestion du NOₓ), **caractérisé en ce qu'**une modification de la composition de mélange a lieu dans le sens d'une atmosphère plus grasse, si
- les gradients pour le signal NOₓ et la valeur lambda sont positifs ou
- les gradients pour le signal NOₓ et la valeur lambda sont négatifs,
et une modification dans le sens d'une atmosphère plus maigre a lieu si
- le gradient pour le signal NOₓ est négatif et le gradient pour la valeur lambda est positif ou
- le gradient pour le signal NOₓ est positif et le gradient pour la valeur lambda est négatif.

2. Procédé selon la revendication 1, **caractérisé en ce que** le signal NOₓ est filtré avant la régulation de la gestion et/ou est moyenné au-dessus d'une période prédéfinie.

3. Procédé selon l'une quelconque des revendications précédentes, **caractérisé en ce que** la surveillance de la fonction est interrompue si la valeur lambda quitte la plage lambda dans l'intervalle de mesure.

4. Procédé selon l'une quelconque des revendications précédentes, **caractérisé en ce que** la plage lambda se situe dans une plage de λ = 0,9 à 1,1, notamment de λ = 0,98 à 1,02.

5. Dispositif de surveillance de la fonction d'un catalyseur à 3 voies (16) dans le pot d'échappement (14) d'un moteur à combustion interne (10), au moins une sonde lambda (18, 20) et un dispositif de mesure sensitif de NOₓ (22) étant disposés dans le pot d'échappement (14), en aval du catalyseur à 3 voies (16) et dans lequel
(a) une plage lambda est prédéfinie
(b) si une valeur lambda dans la plage lambda existe, une dimension du signal NOₓ et/ou une valeur d'un gradient du signal NOₓ qui sont désignées en tant que valeurs de référence sont détectées dans un intervalle de mesure prédéfini et
(c) les valeurs de référence sont comparées à des valeurs seuils et en cas de dépassement des valeurs seuils, une détérioration du catalyseur à 3 voies est affichée,
la plage lambda comprenant un point stoechiométrique de régime du moteur à combustion interne (10) et pendant la surveillance de la fonction par un instrument de commande (32), un signal NOₓ du dispositif de mesure sensitif de NOx (22) et une valeur lambda étant détectés à l'au moins une sonde lambda (18, 20) et en fonction du gradient de la valeur lambda et du signal NOₓ, une composition de mélange à brûler étant influencée dans le sens d'un point de régime effectivement requis corrigeant, jusqu'à ce que la valeur seuil prédéfinie pour le gradient du signal NOₓ soit atteinte (régulation de la gestion du NOₓ), **caractérisé en ce qu'**une modification de la composition de mélange a lieu dans le sens d'une atmosphère plus grasse, si
- les gradients pour le signal NOₓ et la valeur lambda sont positifs ou
- les gradients pour le signal NOₓ et la valeur lambda sont négatifs,
et une modification dans le sens d'une atmosphère plus maigre a lieu si
- le gradient pour le signal NOₓ est négatif et le gradient pour la valeur lambda est positif ou
- le gradient pour le signal NOₓ est positif et le gradient pour la valeur lambda est négatif.

6. Dispositif selon la revendication 5, **caractérisé en ce qu'**il comprend un instrument de commande (32) détectant le signal NOₓ et les valeurs lambda, **en ce qu'**une procédure pour la surveillance de la fonction est mémorisée sous une forme numérisée.

7. Dispositif selon la revendication 6, **caractérisé en ce que** l'instrument de commande (32) est une partie d'un instrument de commande du moteur (30).

8. Dispositif selon l'une quelconque des revendications 5 à 7, **caractérisé en ce qu'**une sonde lambda est disposée en amont du catalyseur (16) (sonde lambda antérieure (18)) et/ou une sonde lambda est disposée en aval du catalyseur (sonde lambda postérieure (20)).

9. Dispositif selon la revendication 8, **caractérisé en ce que** la sonde lambda postérieure (20) et le dispositif de mesure sensitif de NOₓ (22) sont regroupés en un capteur de NOₓ.
